# EUROPÄISCHE PATENTSCHRIFT

(11) **EP 2 008 072 B1**
(45) Veröffentlichungstag und Bekanntmachung des Hinweises auf die Patenterteilung: **12.06.2019**
(21) Anmeldenummer: 07727883.6
(22) Anmeldetag: 05.04.2007
(51) Int. Cl.: G01L 9/00, G01L 9/04

(54) **KERAMISCHE DRUCKSENSOREN UND VERFAHREN ZU IHRER HERSTELLUNG**
CERAMIC PRESSURE SENSORS AND METHOD FOR PRODUCING THE SAME
CAPTEURS DE PRESSION CERAMIQUES ET PROCEDE POUR LES REALISER

(30) Priorität: 10.04.2006 DE 102006018049
(43) Veröffentlichungstag der Anmeldung: 31.12.2008
(73) Patentinhaber: Fraunhofer-Gesellschaft zur Förderung der angewandten Forschung e.V., 80686 München (DE)
(72) Erfinder: PARTSCH, Uwe, 01309 Dresden (DE)
(74) Vertreter: Rauschenbach, Marion
(86) Internationale Anmeldenummer: PCT/EP2007/053415
(87) Internationale Veröffentlichungsnummer: WO 2007/116030

(56) Entgegenhaltungen:
- WO-A1-99/34185
- DE-A1- 10 308 820
- US-A- 5 954 900
- US-B1- 6 387 318
- ENGLISH J M ET AL: "Wireless micromachined ceramic pressure sensors" MICRO ELECTRO MECHANICAL SYSTEMS, 1999. MEMS '99. TWELFTH IEEE INTERNATIONAL CONFERENCE ON ORLANDO, FL, USA 17-21 JAN. 1999, PISCATAWAY, NJ, USA,IEEE, US, 17. Januar 1999 (1999-01-17), Seiten 511-516, XP010321771 ISBN: 0-7803-5194-0

## Beschreibung

Die Erfindung bezieht sich auf die Gebiete Multilayerkeramik und Sensorik und betrifft keramische Drucksensoren, wie sie beispielsweise zur industriellen Prozesskontrolle in pneumatischen oder hydraulischen Anlagen, in der Prüftechnik, Heizungs- und Klimatechnik oder der Umwelttechnik zur Anwendung kommen können und ein Verfahren zu ihrer Herstellung.

Die derzeit am häufigsten genutzte Variante der Detektion der physikalischen Größe Druck ist membranbasiert, wobei die druckinduzierte Auslenkung einer Membran über verschiedene Messprinzipien in ein elektrische Signal umgesetzt wird (Büttgenbach, S., Mikromechanik, Studienbücher: Angewandte Physik, B. G. Teubner, Stuttgart 1991; Pfeifer, G. u.a., Drucksensoren, Verlag Technik, Berlin, 1989; Schaumburg, H., Sensoren, Teubner-Verlag, Stuttgart 1992; Tränkler, H.-R. u.a.,(Hrsg.): Sensortechnik, Springer-Verlag, Berlin 1998)
Zur mechanischen Stabilisierung ist die Membran von dickeren Materialbereichen umgeben.

Bekannte Membranwerkstoffe sind z.B. Silizium, Edelstahl und Keramik (Perraud, E., Sensortechnik, Sonderheft Design & Elektronik-Sensortechnik, 10/97; Pfeifer, G., u.a., Drucksensoren, Verlag Technik, Berlin, 1989; Schaumburg, H., Sensoren, Teubner-Verlag, Stuttgart 1992; Tränkler, H.-R. u.a. (Hrsg.), Sensortechnik, Springer-Verlag, Berlin 1998.
Entsprechend der genannten Werkstoffe gestalten sich die Technologien zur Herstellung der Membranen sehr unterschiedlich. Edelstahl- und Keramikmembranen werden in den letzten Herstellungsschritten vorzugsweise mechanisch bearbeitet, was mit hohen Kosten einhergeht. Die hohen Anforderungen hinsichtlich Membranebenheit und Membrandicke können nur durch aufwendige Oberflächenbearbeitung wie Polieren und Läppen sichergestellt werden. Die Sensorkörper werden dabei einzeln oder in entsprechenden Magazinen bewegt (Pfeifer, G., u.a., Drucksensoren, Verlag Technik, Berlin, 1989).

Siliziumbasierte Membranen können im Mehrfachnutzen herstellt werden (Ätzen). Dies bietet einen großen Vorteil hinsichtlich de Produktivität des Verfahrens, was zu einem günstigeren Preis führt. Weiterhin weisen diese Membranen den Vorteil einer hohen Oberflächengüte nach dem Ätzen auf, wodurch eine nachfolgende kostenaufwändige Oberflächenbearbeitung überflüssig wird (Perraud, E., Sensortechnik, Sonderheft Design & Elektronik-Sensortechnik, 10/97).

Aus der US 6387318 B1 ist eine Verfahren zur Herstellung eines Glaskeramikgegenstandes bekannt, bei dem ein Glaspulvers mit einer Zusammensetzung von SiO₂ (42-59 Gew. %), Al₂O₃ (17-35 Gew. %), MgO (2-25 Gew%) und mindestens einem zusätzlichen Oxid aus TiO₂ und ZrO₂ eingesetzt wird. Das Glaspulver wird mit mindestens einer zusätzlichen zweiten Phase eines keramischen Additives einer anderen Zusammensetzung als die des Glaspulver gemischt, aus der Pulvermischung eine flüssige Dispersion gebildet und die Dispersion in eine permeable Gießform gegeben. Anschließend erfolgt die Entfernung des gegossenen Grünkörperteiles aus der Form, die Trocknung und anschließende das Sintern des Grünkörperteiles.
Bekannt ist ein kabelloser keramischer Sensor, der aus einer keramischen Schicht hergestellt ist und bei dem eine Hohlraumstruktur durch eine flexible keramische

Membran verschlossen ist. Die Keramikstruktur ist in einen veränderlichen C- oder festen L-Schwingkreis integriert (English J.M. et al: "Wireless micromachined ceramic pressure sensors", Micro Electro Mechanical System1999, Twelfth IEEE International Conference on Orlando, FL, USA, 17-21 Jan. 1999, Piscataway, NJ, USA, IEEE, US, 17.Januar 1999, Seite 511-516, XP010321771).

Weiterhin ist aus der WO 99/34185 A1 eine Keramikmembrane für eine kapazitive Vakuummesszelle bekannt, welche in hohem Maße korrosionsfest ist und eine Dicke von < 250µm aufweist und aus einem folienartigen Grünkörper hergestellt ist, die nach dem Sintern und Glätten eine hohe Planität aufweist.

Eine bekannte Schwachstelle bei den bekannten Druckmembrankörpern ist die Fügestelle zwischen Membrankörper und Sensorhausung und/oder Druckanbindung (Pfeifer, G., u.a., Drucksensoren, Verlag Technik, Berlin, 1989).
Hausungen von Drucksensoren bestehen entsprechend den Einsatzbedingungen beispielsweise aus Edelstahl oder AI-Guss oder aus einem Plastikspritzgussteil. Dementsprechend müssen an den Fügestellen sehr unterschiedliche Materialien miteinander verbunden werden, wie zum Beispiel Keramik/Edelstahl oder Silizium/Pyrex/Edelstahl (Pyrex - Borosilikatglas mit Si-angepasstem thermischen Ausdehnungsverhalten) (Perraud, E., Sensortechnik, Sonderheft Design & Elektronik-Sensortechnik, 10/97).
Als Technologien zur Ausbildung der Fügestellen kommen Kleben, Anodisches Bonden, Aufglasen, Weichlöten, Hartlöten oder Schweißen zur Anwendung.

Bei Betrachtung der Materialien und ihrer thermischen Ausdehnungskoeffizienten wird deutlich, dass es bei Temperaturwechseln zu mechanischen Spannungen kommen muss, die zumindest zum Teil dass Sensorsignal beeinflussen. Auch wirken diese mechanischen Spannungen der geforderten Langzeitstabilität der Sensoren entgegen.

Um diese Probleme zu lösen, werden die die Membranen umgebenden Geometriebereiche besonders massiv ausgelegt, um eine mechanische Steifheit zu gewährleisten. Beispielsweise kann der eine 100 µm dicke Membran umgebende Stabilisierungskörper durchaus 1 - 2 cm dick sein.

Ein weiterer Nachteil der bekannten Lösungen für Drucksensoren besteht darin, dass die Auswerteelektronik nicht auf die Membrankörper integriert werden kann (Büttgenbach, S., Mikromechanik, Studienbücher: Angewandte Physik, B. G. Teubner, Stuttgart 1991; Pfeifer, G. u.a., Drucksensoren, Verlag Technik, Berlin, 1989; Schaumburg, H., Sensoren, Teubner-Verlag, Stuttgart 1992; Tränkler, H.-R. u.a., (Hrsg.): Sensortechnik, Springer-Verlag, Berlin 1998).

Der Erfindung liegt die Aufgabe zugrunde, keramische Drucksensoren anzugeben, die weitgehend mechanisch spannungsfrei gelagert sind und eine hohe Lebensdauer, Temperaturstabilität und Temperaturwechselstabilität aufweisen, und deren Herstellung effektiver und kostengünstiger ist.

Die Aufgabe wird durch die in den Ansprüchen angegebene Erfindung gelöst. Vorteilhafte Ausgestaltungen sind Gegenstand der Unteransprüche.

Die erfindungsgemäßen keramischen Drucksensoren bestehen aus einem Träger, der aus einer oder mehreren Folien gebildet ist, wobei die Folie oder die Folien mindestens einen Hohlraum ausbildet oder ausbilden, der mit mindestens einer keramischen Druckmembranfolie abgedeckt ist oder in dem sich den Hohlraum abdeckend eine keramische Druckmembranfolie befindet, und wobei die Folie(n) mindestens eine Zuleitung zur Druckanbindung an den Hohlraum aufweisen und der Folienverbund gesintert ist.

Vorteilhafterweise sind die Folien keramische Folien (HTCC= High Temperature Cofired Ceramics), Glaskeramiken oder Keramik-/Glaskompositen (LTCC= Low Temperature Cofired Ceramics).

Weiterhin vorteilhafterweise weist der Hohlraum im Querschnitt eine runde, ovale, quadratische, dreieckige, recheckige oder mehreckige Form auf.

Ebenfalls vorteilhafterweise besteht die Druckmembranfolie aus Keramik (HTCC= High Temperature Cofired Ceramics), Glaskeramiken oder Keramik-/Glaskompositen (LTCC= Low Temperature Cofired Ceramics).

Von Vorteil ist es auch, wenn die Druckanbindung über zwei kanalartige Zuleitungen realisiert ist.

Weiterhin von Vorteil ist es, wenn ein oder mehrere Hohlräume auf dem Träger neben- und/oder übereinander angeordnet sind.

Vorteilhaft ist es auch, wenn sich über und unter einer Druckmembranfolie ein Hohlraum befindet.

Ebenfalls von Vorteil ist es, wenn der Hohlraum nur teilweise mit dem umgebenden Trägermaterial stofflich verbunden ist, noch vorteilhafterweise, wenn der Hohlraum mit ein bis vier Stegen mit dem umgebenden Trägermaterial stofflich verbunden ist.

Und weiterhin vorteilhaft ist es, wenn die Auswerteelektronik auf dem Sensorkörper positioniert ist.

Bei dem erfindungsgemäßen Verfahren zur Herstellung von keramischen Drucksensoren wird mindestens eine Folie zur Herstellung eines Hohlraumes strukturiert, mindestens eine Druckmembranfolie zur Abdeckung auf den Hohlraum positioniert und nachfolgend der Folienverbund gesintert.

Vorteilhafterweise wird zur Herstellung eines Hohlraumes eine organische Opferpaste gedruckt und mit mindestens einer Druckmembranfolie abgedeckt und verpresst oder laminiert und nachfolgend der Folienverbund gesintert.

Vorteilhaft ist es auch, wenn die Folien mit keramischen Folientechnologien hergestellt werden.

Auch vorteilhaft ist es, wenn die keramischen Drucksensoren mit der keramischen Multilayertechnik hergestellt werden.

Ebenfalls vorteilhafterweise werden auch bereits gesinterte Folien eingesetzt.

Mit der erfindungsgemäßen Lösung können auf einfache, effektive und kostengünstige Art und Weise keramische Drucksensoren hergestellt werden, die weitgehend mechanisch spannungsfrei gelagert sind und damit hinsichtlich Langzeitstabilität und Unbeeinflussbarkeit des Messsignales wesentlich verbessert sind, gegenüber Lösungen nach dem Stand der Technik.

Durch die Anwendung der aus der Keramik bekannten keramischen Multilayertechnik können Drucksensoren aus den verschiedensten glaskeramischen und keramischen Materialien hergestellt werden. Bedingung ist dabei, dass sich das Material zu einer Folie verarbeiten lässt.
Die erfindungsgemäßen Drucksensoren können dabei sowohl in der Ebene in großen Stückzahlen angeordnet werden, als auch in vertikaler Richtung, wobei der Drucksensor mit seinem Hohlraum und der Druckanbindung auch in andere Baugruppen auf oder in der Trägerfolie ein- oder mehrfach integriert werden kann. Auch können durch die Verwendung von mehreren Folien innenliegende Leiterbahnen und Durchkontaktierungen für die elektrische Anbindung der Auswerteelektronik integriert werden.

Die Strukturierung der Folien zur Ausbildung des Hohlraumes und der Mikrokanäle kann mittels Mikrostanzen, Laser, Mikrofräsen oder Ätzen erfolgen.

Die keramischen Folien und Druckmembranfolien werden mittels Foliengießverfahren (Tape Casting) hergestellt und sind kommerziell in verschiedenen Zusammensetzungen und Dicken von 50 bis 250 µm erhältlich.

Ein besonderer Vorteil der erfindungsgemäßen Lösung besteht in der Miniaturisierung keramischer Drucksensoren, die nur durch die Foliendicke und Strukturierung begrenzt ist. Es sind jedoch auch größere Drucksensoren, die den bekannten Drucksensoren in der Größe entsprechen, herstellbar.

Das erfindungsgemäße Herstellungsverfahren ermöglicht es auch, die Hohlräume mit beliebigen Gasen zu befüllen oder zu evakuieren. Auch kann der Hohlraum von beiden Seiten von einer Druckmembran abgeschlossen sein.
Möglich ist auch, dass ein Hohlraum mit einer Druckmembranfolie abgedeckt ist und eine oder mehrere Folien darüber angeordnet werden, wobei sich über der Druckmembranfolie gegenüber liegend zum unteren Hohlraum ein weiterer Hohlraum befindet.

Erfindungsgemäße keramische Drucksensoren sind als Differenzdrucksensoren, Absolutdrucksensoren aber auch zur Realisierung redundanter Systeme einsetzbar.

Die erfindungsgemäßen Drucksensoren zeigen gegenüber Drucksensoren nach dem Stand der Technik verbesserte Eigenschaften oder mindestens gleich gute Eigenschaften, wobei in diesen Fällen die Herstellung deutlich einfacher und kostengünstiger ist.

Nachfolgend wird die Erfindung an einem Ausführungsbeispiel näher erläutert.

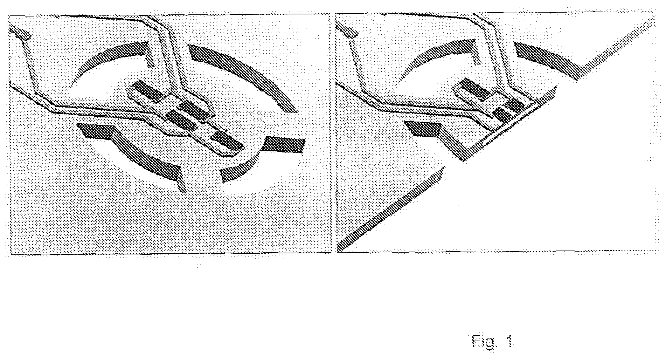

Dabei zeigt
- Fig. 1: eine schematische Prinzipdarstellung eines erfindungsgemäßen keramischen Drucksensors in der Totalen und im Schnitt. Die in der Figur ersichtlichen Abmessungen entsprechen nicht den Tatsächlichen.

### Beispiel 1

Ein piezoresistiver Drucksensor entsteht durch die Vereinigung eines LTCC-Sensorgrundkörpers aus 5 Folien (1250 µm dick) und einer LTCC-Membran aus einer Folie (250 µm dick). Die Folien des Sensorgrundkörpers werden zunächst verpresst, d.h. laminiert. Nach dem Laminieren werden sowohl der Druckraum selbst, als auch die zur Druckanbindung notwendigen zwei Mikrokanäle (Tiefe Druckraum und Mikrokanäle 400 µm) vom Sensorgrundkörper mittels Laserablation abgetragen. Die Mikrokanäle führen vom Druckraum zur Druckanbindung über eine Länge von jeweils 8 mm. Gleichzeitig werden vier Öffnungen zur mechanischen Freistellung des Druckraumes herausgeschnitten. Das Herausschneiden von vier identischen Öffnungen wird ebenfalls an der Membranfolie durchgeführt.

Nach dieser Strukturierung wird die Membranfolie über dem laminierten Sensorgrundkörper so positioniert, dass die Öffnungen zur mechanischen Freistellung übereinander angeordnet sind. Nachfolgend werden die Folien miteinander verpresst. Auf diese Weise entsteht der zur Druckdetektion notwendige abgeschlossene Druckraum.

Während der anschließenden Wärmebehandlung bei 875 °C versintern Grundkörper und Membran unter einer Volumenschwindung von 35 % und es entsteht ein monolithischer glaskeramischer Körper. Der Membrandurchmesser beträgt nach der Wärmebehandlung 4.5 mm.

Die zur Messung des Druckes notwendigen Dickschichtwiderstände und Leitbahnen werden nun mittels Siebdruck abgeschieden und danach bei 850°C gesintert.

Von den auf der Membran befindlichen 4 Widerstände sind zwei im Randbereich und zwei im Mittenbereich angeordnet und zu einer Wheatstonebrücke verschalten.

Bei Druckbeaufschlagung entsteht durch die Druckanbindung des Druckraums über die Mikrokanäle eine Verwölbung der Membran. Die Membranwölbung verursacht eine Widerstandsänderung, die proportional zum beaufschlagenden Druck ist und als Brückenspannungsänderung gemessen wird.

Im Vergleich zu Drucksensoren aus Silizium/Pyrex/Edelstahl nach dem Stand der Technik zeigen die erfindungsgemäßen Drucksensoren eine deutlich erhöhte Lebensdauer.

## Patentansprüche

1. Keramische Drucksensoren, **dadurch gekennzeichnet, dass** die keramischen Drucksensoren aus einen Träger bestehen, der aus einer oder mehreren Folien gebildet ist, wobei die Folie(n) mindestens einen Hohlraum ausbildet oder ausbilden, der mit mindestens einer keramischen Druckmembranfolie abgedeckt ist oder in dem sich den Hohlraum abdeckend eine keramische Druckmembranfolie befindet, und wobei die Folie(n) mindestens eine Zuleitung zur Druckanbindung an den Hohlraum aufweisen und der Folienverbund gesintert ist.

2. Keramische Drucksensoren nach Anspruch 1, bei denen die Folien keramische Folien sind.

3. Keramische Drucksensoren nach Anspruch 1, bei denen der Hohlraum im Querschnitt eine runde, ovale, quadratische, dreieckige, recheckige oder mehreckige Form aufweist.

4. Keramische Drucksensoren nach Anspruch 1, bei denen die Druckmembranfolie aus Keramik (HTCC= High Temperature Cofired Ceramics), Glaskeramiken oder Keramik-/Glaskompositen (LTCC= Low Temperature Cofired Ceramics) besteht.

5. Keramische Drucksensoren nach Anspruch 1, bei denen die Druckanbindung über zwei kanalartige Zuleitungen realisiert ist.

6. Keramische Drucksensoren nach Anspruch 1, bei denen ein oder mehrere Hohlräume auf dem Träger neben- und/oder übereinander angeordnet sind.

7. Keramische Drucksensoren nach Anspruch 1, bei denen sich über und unter einer Druckmembranfolie ein Hohlraum befindet.

8. Keramische Drucksensoren nach Anspruch 1, bei denen der Hohlraum nur teilweise mit dem umgebenden Träger stofflich verbunden ist.

9. Keramische Drucksensoren nach Anspruch 8, bei denen der Hohlraum mit ein bis drei Stegen mit dem umgebenden Träger stofflich verbunden ist.

10. Keramische Drucksensoren nach Anspruch 1, bei denen die Auswerteelektronik auf dem Sensorkörper positioniert ist.

11. Verfahren zur Herstellung von keramischen Drucksensoren nach mindestens einem der Ansprüche 1 bis 10, **dadurch gekennzeichnet, dass** mindestens eine Folie zur Herstellung eines Hohlraumes strukturiert wird, mindestens eine Druckmembranfolie zur Abdeckung auf den Hohlraum positioniert wird und nachfolgend der Folienverbund gesintert wird.

12. Verfahren nach Anspruch 11, bei dem zur Herstellung eines Hohlraumes eine organische Opferpaste gedruckt und mit mindestens einer Druckmembranfolie abgedeckt und verpresst oder laminiert wird und nachfolgend der Folienverbund gesintert wird.

13. Verfahren nach Anspruch 11, bei dem die Folien mit keramischen Folientechnologien hergestellt werden.

14. Verfahren nach Anspruch 11, bei dem die keramischen Drucksensoren mit der keramischen Multilayertechnik hergestellt werden.

15. Verfahren nach Anspruch 11, bei dem auch bereits gesinterte Folien eingesetzt werden.

## Claims

1. Ceramic pressure sensors, **characterized in that** the ceramic pressure sensors consist of a support, which is formed from one or more films, wherein the film(s) forms or form at least one cavity that is covered by at least one ceramic pressure membrane film or in which there is a ceramic pressure membrane film covering the cavity, and wherein the film(s) has/have at least one supply line for the pressure connection to the cavity, and the film composite is sintered.

2. Ceramic pressure sensors according to Claim 1, in which the films are ceramic films.

3. Ceramic pressure sensors according to Claim 1, in which the cavity has in cross section a round, oval, square, triangular, rectangular or polygonal shape.

4. Ceramic pressure sensors according to Claim 1, in which the pressure membrane film consists of ceramic (HTCC = High Temperature Cofired Ceramics), glass ceramics or ceramic/glass composites (LTCC = Low Temperature Cofired Ceramics).

5. Ceramic pressure sensors according to Claim 1, in which the pressure connection takes the form of two channel-type supply lines.

6. Ceramic pressure sensors according to Claim 1, in which one or more cavities are arranged next to one another and/or one on top of the other on the support.

7. Ceramic pressure sensors according to Claim 1, in which there is a cavity above and below a pressure membrane film.

8. Ceramic pressure sensors according to Claim 1, in which the cavity is only partially materially connected to the surrounding support.

9. Ceramic pressure sensors according to Claim 8, in which the cavity is materially connected to the surrounding support by one to three webs.

10. Ceramic pressure sensors according to Claim 1, in which the evaluation electronics are positioned on the sensor body.

11. Method for producing ceramic pressure sensors according to at least one of Claims 1 to 10, **characterized in that** at least one film is structured for producing a cavity, at least one pressure membrane film is positioned on the cavity for covering, and the film composite is subsequently sintered.

12. Method according to Claim 11, in which, to produce a cavity, an organic sacrificial paste is printed and covered with at least one pressure membrane film and compressed or laminated, and the film composite is subsequently sintered.

13. Method according to Claim 11, in which the films are produced by ceramic film technologies.

14. Method according to Claim 11, in which the ceramic pressure sensors are produced by the ceramic multilayer technique.

15. Method according to Claim 11, in which already sintered films are also used.

## Revendications

1. Capteurs de pression en céramique, **caractérisés en ce que** les capteurs de pression en céramique se composent d'un élément porteur qui est formé par un ou plusieurs films, le ou les films formant au moins un espace creux qui est recouvert par au moins un film formant membrane de pression en céramique ou dans lequel se trouve un film formant membrane de pression en céramique qui recouvre l'espace creux, et le ou les films possédant au moins une conduite d'arrivée destinée à une connexion de pression à l'espace creux et le composé de film étant fritté.

2. Capteurs de pression en céramique selon la revendication 1, avec lesquels les films sont des films en céramique.

3. Capteurs de pression en céramique selon la revendication 1, avec lesquels l'espace creux présente, en section transversale, une forme ronde, ovale, carrée, triangulaire, rectangulaire ou polygonale.

4. Capteurs de pression en céramique selon la revendication 1, avec lesquels le film formant membrane de pression se compose de céramique (HTCC = High Temperature Cofired Ceramics - Céramique cofrittée à haute température), de vitrocéramique ou de composites céramique/verre (LTCC = Low Temperature Cofired Ceramics - Céramique cofrittée à basse température).

5. Capteurs de pression en céramique selon la revendication 1, avec lesquels la connexion de pression est réalisée par le biais de deux conduites d'arrivée de type canal.

6. Capteurs de pression en céramique selon la revendication 1, avec lesquels un ou plusieurs espaces creux sont disposés sur l'élément porteur les uns à côté des autres et/ou au-dessus des autres.

7. Capteurs de pression en céramique selon la revendication 1, avec lesquels un espace creux se trouve au-dessus et au-dessous d'un film formant membrane de pression.

8. Capteurs de pression en céramique selon la revendication 1, avec lesquels l'espace creux n'est que partiellement relié matériellement avec l'élément porteur qui l'entoure.

9. Capteurs de pression en céramique selon la revendication 8, avec lesquels l'espace creux est relié matériellement avec l'élément porteur qui l'entoure par un à trois éléments jointifs.

10. Capteurs de pression en céramique selon la revendication 1, avec lesquels l'électronique d'interprétation est positionnée sur le corps de capteur.

11. Procédé de fabrication de capteurs de pression en céramique selon au moins l'une des revendications 1 à 10, **caractérisé en ce qu'**au moins un film est structuré en vue de produire un espace creux, au moins un film formant membrane de pression est positionné sur l'espace creux en vue de le recouvrir et le composé de film est ensuite fritté.

12. Procédé selon la revendication 11, avec lequel, en vue de produire un espace creux, une pâte sacrificielle organique est imprimée et recouverte d'au moins un film formant membrane de pression puis comprimée ou stratifiée et le composé de film est ensuite fritté.

13. Procédé selon la revendication 11, avec lequel les films sont fabriqués avec des technologies de film en céramique.

14. Procédé selon la revendication 11, avec lequel les capteurs de pression en céramique sont fabriqués avec la technique multicouche de céramique.

15. Procédé selon la revendication 11, avec lequel des films déjà frittés sont également utilisés.
